# EUROPÄISCHE PATENTSCHRIFT

(11) **EP 2 549 234 B1**
(45) Veröffentlichungstag und Bekanntmachung des Hinweises auf die Patenterteilung: **16.05.2018**
(21) Anmeldenummer: 12004761.8
(22) Anmeldetag: 26.06.2012
(51) Int. Cl.: G01D 3/08, B30B 15/00, B30B 15/14

(54) **Vorrichtung und Verfahren zur sicheren Bewegungserkennung mit Toleranzschwelle**
Device and method for secure motion detection with tolerance threshold
Dispositif et procédé pour la détection sûre de mouvements avec un seuil de tolérance

(30) Priorität: 15.07.2011 DE 102011107777
(43) Veröffentlichungstag der Anmeldung: 23.01.2013
(73) Patentinhaber: Phoenix Contact GmbH & Co. KG, 32825 Blomberg (DE)
(72) Erfinder: Teutenberg, Jürgen, 59602 Rüthen (DE); Rohs, Markus, 32825 Blomberg (DE)
(74) Vertreter: Bill, Burkart Hartmut

(56) Entgegenhaltungen:
- EP-A1- 0 316 519
- DE-A1-102006 023 292

## Beschreibung

Die Erfindung betrifft eine Vorrichtung sowie ein Verfahren zur sicheren Unterscheidung zulässiger und unzulässiger Bewegungen mit Toleranzschwelle. Die Erfindung betrifft insbesondere eine Vorrichtung sowie ein Verfahren zur sicherheitsgerichteten Ermittlung mit Toleranzschwelle der relativen Bewegung eines Objekts gegenüber einem Detektor oder einer Rotationsbewegung sich drehender Objekte.

Die Erfindung bezieht sich auf die sichere Erkennung einer relativen Bewegung mit Toleranzschwelle der relativen Bewegung eines beweglichen Objekts gegenüber dem Detektor und/oder einer Drehbewegung eines drehbaren Objekts, die einen Detektor sowie eine Auswerteeinheit zur Auswertung der vom Detektor gelieferten Messsignale umfasst.

Solche sogenannten sicherheitsgerichteten Überwachungssysteme werden beispielsweise in sicherheitsrelevanten Maschinenanlagen eingesetzt, bei denen sich bestimmte Maschinenteile nur innerhalb eines bestimmten Bewegungsbereichs oder nur in bestimmten Richtungen bzw. nur in einer bestimmten Richtung bewegen dürfen. Eine weitere Anwendungsmöglichkeit für solche Überwachungssysteme ist die Überwachung des Stillstands oder der Einhaltung eines bestimmten Bewegungsbereichs verschiebbarer oder drehbarer Objekte innerhalb vorgegebener Toleranzgrenzen. Dies ist beispielsweise der Fall bei einer Drehbank, die sich nur in einer bestimmten Arbeitsrichtung drehen darf, um weder das Drehwerkzeug noch das Werkstück zu beschädigen.

Bei bekannten sicherheitsgerichteten Überwachungssystemen werden die von entsprechenden Bewegungsdetektoren erzeugten Signale üblicherweise dahingehend ausgewertet, um aus den Messinformation der Detektoren die Bewegungsgeschwindigkeit und die Bewegungsrichtung des betreffenden Objekts zu ermitteln. Bewegungen des beobachteten Objekts in eine unzulässige Richtung oder in einen unzulässigen Bewegungsbereich hinein werden dann als Steuerungsindikator verwendet, der beispielsweise zur Abschaltung entsprechender Anlagenteile führen kann.

Im Stand der Technik sind auf diversen Gebieten verschiedene Ansätze für eine Richtungserkennung auch innerhalb eines Toleranzbereichs bekannt, sowie zum Stoppen oder zur Korrektur eines sich bewegenden Objekts. So betrifft die EP 0 316 519 A1 ein Verfahren zur Messung und Korrektur einer Stößelverstellung bei schnell laufenden Hubpressen und sieht vor, den Stößel in Abhängigkeit von der Hubzahl nachzustellen und den jeweils tatsächlichen Wert der Eintauchtiefe des Stößels zu messen.

Die EP 0 732 194 B1 betrifft die Messung und Regelung der Höhenverstellung eines Stößels, wobei hierbei vorgesehen ist, bei Abweichung einer jeweiligen Ist-Stellung von der entsprechenden Soll-Stellung die Höhenstellung des Stößels derart zu ändern, dass er die jeweilige Soll-Stellung in der unteren bzw. oberen Totpunktstellung wieder einnimmt.

Die DE 199 62 378 A1 beschreibt ein Verfahren und eine Einrichtung zur Überwachung der Bewegungsrichtung eines sich bewegenden Maschinenbauteils. Hierbei wird die Bewegung des Bauteils abgeschaltet, wenn das Bauteil die falsche Bewegungsrichtung aufweist, wobei ein Signalgeber ein zur Bewegungsrichtung des Bauteils unsymmetrisches Magnetfeld generiert und zur Erkennung der Unsymmetrie des Magnetfelds als Signalnehmer ein Hallsensor und/oder ein induktiver Sensor verwendet wird.

Die DE 10 2006 023 292 A1 betrifft eine Messvorrichtung zur Durchführung wenigstens eindimensionaler Koordinatenmessungen an einem Werkstück mit einem längs in eine Fahrtrichtung verfahrbaren Messschlitten, der von einem Bediener in einer jeweiligen Messposition positioniert wird um das Werkstück zu erfassen. Hierbei kann der Bediener die Erkennung der Positionierung durch eine Bewegung des Messschlittens in eine entgegengesetzte Richtung annullieren, wobei durch eine Entscheidungslogik die Geschwindigkeit und ein Grenzwert des Verfahrwegs überwacht wird, um festzustellen, ob es sich um eine kurze oder um eine längere Richtungsumkehr des Messschlittens handelt.

Bei den bekannten sicherheitsgerichteten Überwachungssystemen treten jedoch Probleme auf, wenn bestimmte Anlagenteile auf Grund äußerer Einflüsse, wie z.B. mechanische Schwingungen, Schlupf, etc., die bei manchen Maschinenanlagen während des normalen Betriebs auftreten können, minimale Bewegungen in eine unerlaubte Richtung vollziehen können, obwohl sich die betreffende Anlage durchaus in einem fehlerfreien Zustand befindet.

Solche Bewegungen können dann zur unnötigen Abschaltung der Maschinenanlage führen, wodurch deren Verfügbarkeit eingeschränkt ist und überflüssige Wartungsarbeiten anfallen können.

Dennoch darf auch bei Maschinenanlagen, bei denen es auch unter normalen Betriebsbedingungen zu Bewegungsschwankungen einiger Anlagenteile kommen kann, eine Bewegung in eine unzulässige Richtung über eine bestimmte Toleranz hinaus nicht erlaubt sein, da sonst beispielsweise über einen längeren Zeitraum eine langsame Drift in die falsche Bewegungsrichtung möglich ist, wodurch ein gefährlicher Zustand der Anlage entstehen kann.

Aufgabe der Erfindung ist es daher, eine Vorrichtung sowie ein Verfahren zur sicherheitsgerichteten Ermittlung mit Toleranzschwelle zur Überwachung der relativen Bewegung eines Objekts der eingangs genannten Art bereit zu stellen, das unter den oben erläuterten Aspekten sowohl die Sicherheit als auch die Verfügbarkeit einer Maschinenanlage verbessert.
Diese Aufgabe wird mit der vorliegenden Erfindung gelöst durch eine Vorrichtung und ein Verfahren mit den in den unabhängigen Ansprüchen definierten Merkmalen. Vorteilhafte Weiterbildungen und Ausgestaltungen der Erfindung sind jeweils in den Unteransprüchen angegeben.
Nach einem Aspekt der vorliegenden Erfindung wird die oben genannte Aufgabe gelöst durch eine Vorrichtung zur Erfassung der Position, einer relativen Bewegung eines beweglichen Objekts, der Drehwinkelposition und/oder einer Drehbewegung eines drehbaren Objekts umfassend mindestens einen Detektor sowie elektronische Mittel zur Auswertung der vom Detektor gelieferten Messsignale, wobei die elektronischen Mittel dazu ausgebildet sind, eine Toleranzschwelle zu bestimmen, die einen erlaubten Bereich für Bewegungen des Objekts in eine unzulässige Richtung definiert, und die Toleranzschwelle nur dann neu zu bestimmen, wenn sich das beobachtete Objekt in eine zulässige Richtung bewegt.
Nach einem weiteren Aspekt der vorliegenden Erfindung wird die oben genannte Aufgabe ferner gelöst durch ein Verfahren zur Erfassung der Position, einer relativen Bewegung eines beweglichen Objekts, der Drehwinkelposition und/oder einer Drehbewegung eines drehbaren Objekts umfassend die folgenden Schritte:
- Bestimmen einer Toleranzschwelle, die einen erlaubten Bereich für Bewegungen des Objekts in eine unzulässige Richtung definiert, und
- erneutes Bestimmen der Toleranzschwelle nur dann, wenn sich das beobachtete Objekt in eine zulässige Richtung bewegt. Gemäß dem vorliegenden Erfindungsgedanken wird zunächst eine Toleranz definiert, innerhalb der eine Bewegung in eine unzulässige Richtung erlaubt ist. Anschließend wird eine Toleranzschwelle in Abhängigkeit von der Bewegung des betreffenden Objekts oder Maschinenteils kontinuierlich neu berechnet. Dadurch wird die Toleranzschwelle an die veränderte Position des betreffenden Objekts oder Maschinenteils angepasst. Die Toleranzschwelle entspricht dabei immer der Differenz zwischen der aktuellen Position des beobachteten Objekts und der Toleranz.
Die Toleranzschwelle wird jedoch nur dann an die veränderte Position des beobachteten Objekts angepasst, wenn eine Bewegung des betreffenden Objekts in eine zulässige Richtung stattfindet. Wenn sich dagegen das überwachte Objekt in eine unzulässige Richtung bewegt, bleibt die Toleranzschwelle unverändert.
Das heißt, wenn sich das betreffende Objekt oder Maschinenteil in die erlaubte Richtung bewegt und anschließend eine neue aktuelle Position einnimmt, dann wird die Toleranzschwelle stetig mitgeführt. Die stetige Nachführung der Toleranzschwelle erfolgt vorzugsweise derart, dass der Abstand zwischen Position und Toleranzschwelle immer dem vorgegebenen Wert der Toleranz entspricht.

Wenn beispielsweise die ursprüngliche aktuelle Position des beobachteten Objekts bei einem Skalenwert "0" gelegen hat und der Toleranzwert für eine Bewegung in der unerlaubten negativen Richtung "3" Skalenwerte beträgt, dann lag die Toleranzschwelle bei "-3". Wenn nun eine neue aktuelle Position des beobachteten Objekts bei einem Skalenwert "1" liegt, dann befindet sich die Toleranzschwelle bei "-2", da der Toleranzwert für eine Bewegung in der unerlaubten negativen Richtung mit konstanten "3" Skalenwerten beibehalten bleibt. Der Abstand zwischen der aktuellen Position des beobachteten Objekts und der Toleranzschwelle entspricht somit stets dem zuvor festgelegten Wert der Toleranz für eine Bewegung in der unerlaubten Richtung.

Wenn sich das betreffende Objekt oder Maschinenteil in eine unzulässige Richtung bewegt, dann nähert sich die Position der Toleranzschwelle. Solange die Toleranzschwelle jedoch nicht in der unzulässigen Richtung unter- bzw. überschritten wird, kann der Betrieb der Anlage normal weiter laufen. Geringfügige Bewegungen des beobachteten Objekts in eine unzulässige Richtung können somit erlaubt sein, ohne dass dadurch der Betrieb der Maschinenanlage unterbrochen werden müsste.

Wenn sich jedoch beispielsweise die aktuelle Nulllage des beobachteten Objekts oder dessen Position im lastfreien Zustand zu einer erlaubten Richtung hin verschiebt, so wird Toleranzschwelle dementsprechend nachgeführt und neu festgelegt. Sobald eine Bewegungen des beobachteten Objekts in eine unzulässige Richtung die aktuelle Toleranzschwelle erreicht oder darüber hinaus geht, kann dies wieder als Indikator zur Abschaltung der Anlage betrachtet werden. Auf diese Weise wird ein die Betriebs- oder Anlagensicherheit gefährdender Richtungswechsel des beobachteten Objekts rechtzeitig erkannt.

Die vorliegende Erfindung sieht folglich die Nachführung einer Toleranzschwelle für erlaubte Bewegungsbereiche in eine vordefinierte zulässige Bewegungsrichtung vor. Dadurch können äußere Einflüsse besser berücksichtigt werden, wie z.B. mechanische Schwingungen oder Schlupf, die minimale Bewegungen innerhalb des Toleranzbereichs in eine unerlaubte Richtung verursachen können, während sich die betreffende Anlage in einem fehlerfreien Betriebszustand befindet. Durch die Nachführung der Toleranzschwelle bei Bewegungen des überwachten Objekts oder Maschinenteils in einer zulässigen Richtung, wird der Toleranzbereich für erlaubte Bewegungen dagegen in einem konstanten Rahmen gehalten. Denn sobald das überwachte Objekt oder Maschinenteil eine Bewegung in Richtung einer unerlaubten Richtung vollzieht, wird die nachgeführte Toleranzschwelle bereits nach Überwindung des konstanten Toleranzwerts überschritten.

Mit der vorliegenden Erfindung können zulässige Bewegungen von Maschinenteilen auch in einer unerlaubten Richtung innerhalb von vorbestimmten Toleranzen zuverlässiger erkannt werden. Dadurch können unnötige Abschaltungen einer Maschinenanlage sowie überflüssige Wartungsarbeiten vermieden and damit die Verfügbarkeit der Anlage verbessert werden.

Mit der erfindungsgemäßen Bewegungsüberwachung kann beispielsweise die aktuelle Position eines verschiebbaren Objekts oder die Drehbewegung und Drehwinkelposition eines drehbaren Objekts bestimmt werden. Ebenso kann mit der erfindungsgemäßen Bewegungsüberwachung eine relative Bewegung oder die Position eines translatorisch beweglichen Objekts erfasst werden.
Die von einem oder mehreren der Detektoren erzeugten Signale werden vorzugsweise in einer Auswerteeinheit ausgewertet, die mit elektronischen Mitteln ausgestattet ist, wie z.B. einem oder mehreren Mikroprozessoren und Speichern, die zur Ermittlung und Speicherung der oben genannten Messgrößen geeignet sind, insbesondere der aktuellen relativen Position oder der Drehwinkelposition sowie der Bewegungsrichtung des Objekts. Dadurch können die Position, die Drehwinkelposition, die Drehbewegung und/oder die Bewegungsrichtung des Objekts auf einfache Weise aus den von mindestens einem Detektor gelieferten Messsignalen bestimmt und gespeichert werden.
Die erfindungsgemäße Vorrichtung und das erfindungsgemäße Verfahren sehen vor, die Toleranzschwelle in Abhängigkeit von einer aktuellen Position des Objekts derart zu bestimmen, dass die Differenz zwischen der Toleranzschwelle und der aktuellen Position des Objekts einem vorgegebenen Toleranzwert entspricht. Die Toleranzschwelle wird nur dann an eine neue Position des Objekts angepasst, wenn sich das Objekt in eine zulässige Richtung bewegt.

Ferner kann vorgesehen sein, dass die Toleranzschwelle dann an eine neue Position des Objekts angepasst wird, nachdem sich das Objekt in eine zulässige Richtung bewegt hat, wobei die neue Position des Objekts durch die weiteste Bewegung des Objekts in die zulässige Richtung festgelegt wird.

Gemäß einer weiteren bevorzugten Ausführungsform der vorliegenden Erfindung werden die aktuelle Position, die Drehwinkelposition, die Drehbewegung und/oder die Bewegungsrichtung des Objekts über eine bestimmte Zeitspanne erfasst, um daraus die Toleranzschwelle zu bestimmen. Zusätzlich oder alternativ kann die aktuelle Position, die Drehwinkelposition, die Drehbewegung und/oder die Bewegungsrichtung des Objekts auch in bestimmten Zeitintervallen erfasst werden.

Um ein stetiges Nachführen der Toleranzschwelle während des Betriebs der überwachten Anlage zu gewährleisten kann die Toleranzschwelle in Abhängigkeit von der Bewegung, der Bewegungsrichtung und/oder der aktuellen Position des Objekts kontinuierlich neu berechnet werden.

Die erfindungsgemäße Vorrichtung und das erfindungsgemäße Verfahren können das bewegliche Objekt auch derart steuern, dass eine Bewegung des Objekts verhindert oder der Betrieb der überwachten Anlage eingestellt wird, sobald die Toleranzschwelle erreicht und/oder überschritten wurde. Dies wird beispielsweise durch eine Abschaltung bestimmter Maschinen- oder Anlagenteile erzielt. Ein Erreichen und/oder Überschreiten der Toleranzschwelle wird vorzugsweise durch einen Vergleich mit der aktuellen Position des beobachteten Objekts erfasst, wobei die Toleranzschwelle in elektronischen Mitteln gespeichert werden kann.

Die vorliegende Erfindung kann sowohl zur Überwachung oder Messung von Rotationsbewegungen als auch zur Überwachung oder Messung von Linearbewegungen angewendet werden. Die vorliegende Erfindung kann somit zur Überwachung der Einhaltung vorbestimmter Toleranzbereiche bei translatorisch beweglichen Objekten und/oder bei drehbaren Objekten eingesetzt werden, wobei das Objekt eine relative Bewegung und/oder eine Rotationsbewegung gegenüber einem oder mehreren Detektoren nur innerhalb vorgegebener Grenzwerte bzw. bis zur Toleranzschwelle vollziehen darf. Dazu muss das zu überwachende Objekt seine Position innerhalb der vorgegebenen Toleranzwerte einhalten. Um Bewegungen außerhalb der vorgegebenen Toleranzen von zulässigen Schwankungen innerhalb des vorgegebenen Toleranzwerts zu unterscheiden, können entsprechende zulässige elektrische und örtliche Toleranzwerte der von den Detektoren erzeugten Messsignale vorgegeben werden.

Im Folgenden wird die vorliegende Erfindung anhand eines bevorzugten Ausführungsbeispiels unter Bezugnahme auf die beigefügte Zeichnung näher erläutert.

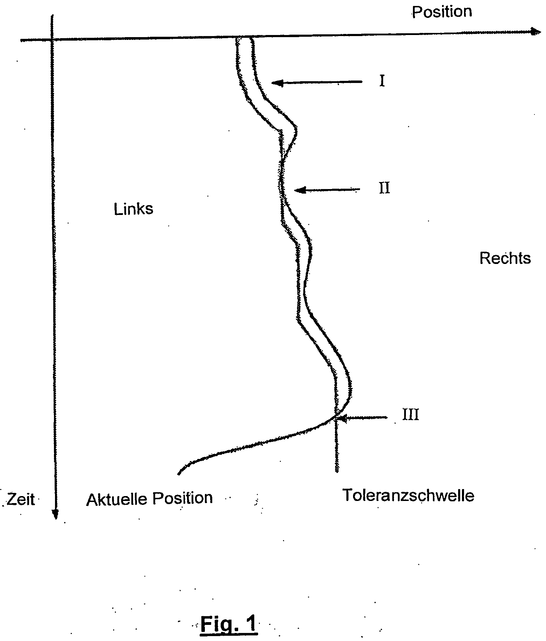

Figur 1 zeigt ein Diagramm mit Kennlinien, wie sie bei Anwendung einer bevorzugten Ausführungsform der vorliegenden Erfindung zur sicherheitsgerichteten Überwachung eines beweglichen Maschinenteils oder Anlagenteils beispielsweise entstehen können. Dabei stellt der Bereich links von den Kennlinien eine unzulässige Richtung dar, in die sich das bewegliche Maschinenteil nicht bewegen darf und der Bereich rechts von den Kennlinien stellt eine zulässige Richtung dar, in die sich das bewegliche Maschinenteil bewegen darf.

Das Diagramm zeigt mit seiner ersten Kennlinie den zeitlichen Verlauf (y-Achse) der aktuellen Position (x-Achse) des unter Beobachtung stehenden beweglichen Maschinenteils oder Anlagenteils, das sich nur innerhalb bestimmter Toleranzen bewegen darf. Die zweite der in Figur 1 gezeigten Kennlinien repräsentiert eine Toleranzschwelle, welche die Grenze für den zulässigen Bewegungsbereich des beweglichen Maschinenteils in der unzulässigen Richtung definiert.

Die Toleranzschwelle dient somit der zuverlässigen Erkennung und Unterscheidung einer Bewegung des beobachteten Maschinenteils in einer zulässigen oder unzulässigen Richtung, wobei geringfügige Bewegungen in der unzulässigen Richtung erlaubt sein sollen. In Figur 1 repräsentiert die im Diagramm weitgehend rechts verlaufende Linie die aktuelle Position des betreffenden Maschinenteils in Abhängigkeit der Zeit und damit den tatsächlichen Bewegungsverlauf des beobachteten Objekts. Die im Diagramm weitgehend links verlaufende Linie repräsentiert die Toleranzschwelle für Bewegungen des Objekts in der unzulässigen Richtung. In dem dargestellten Anwendungsbeispiel ist folglich eine Bewegung des Objekts nach links über die Toleranzschwelle hinaus nicht erlaubt, während eine Bewegung des Objekts nach rechts zulässig sein soll.

Zum Beginn der Kennlinien am oberen Rand des Diagramms befinden sich die Kennlinien in einem Abstand zueinander, der einem vorgegebenen Toleranzwert entspricht. In dem ersten mit "I" gekennzeichneten Kurvenabschnitt bewegt sich das beobachtete Objekt in die erlaubte Richtung nach rechts. Wie in Figur 1 zu erkennen, bleibt dabei die Toleranzschwelle nicht andauernd fixiert, sondern wird flexibel der aktuellen Position des beweglichen Objekts über den zeitlichen Verlauf seiner Bewegung angepasst, indem die Toleranzschwelle im konstanten Abstand des vorgegebenen Toleranzwerts zur aktuellen Position des beweglichen Objekts - jedoch nur bei Bewegungen in der zulässigen Richtung - nachgeführt wird.

In dem zweiten mit "II" gekennzeichneten Kurvenabschnitt bewegt sich das beobachtete Objekt in die unzulässige Richtung nach links. Dabei nähert sich die Position des beweglichen Objekts der Toleranzschwelle, ohne diese jedoch zu kreuzen, d.h. zu unter- bzw. überschreiten. Je nach Einstellung des erfindungsgemäßen Überwachungssystems kann bereits eine Berührung oder erst eine Unter- bzw. Überschreitung der Toleranzschwelle die Abschaltung der überwachten Anlage bewirken. Auf diese Weise können marginale Bewegungen des Objekts in die unzulässige Richtung zugelassen werden, ohne eine unnötige Abschaltung der überwachten Anlage herbeizuführen.

Im dritten mit "III" gekennzeichneten Kurvenabschnitt summieren sich jedoch die Bewegungen des überwachten Objekts in die unzulässige Richtung nach links, so dass sich dessen aktuelle Position der Toleranzschwelle nähert und diese schließlich unter- bzw. überschreitet. Aufgrund der Überschneidung der aktuellen Position des Objekts mit der Toleranzschwelle und der somit sicher erkannten unzulässigen Bewegung des beobachteten Objekts, kann eine Steuerung die Abschaltung der Anlage veranlassen. Auf diese Weise kann eine gefährliche Richtungserkennung rechtzeitig und zuverlässiger erfasst und erkannt werden.

Mit der erfindungsgemäßen Vorrichtung und dem erfindungsgemäßen Verfahren können Bewegungsparameter beweglicher Objekte erfasst und überwacht werden, indem relative Bewegung des beweglichen Objekts, wie z.B. eine Verschiebungsbewegung und/oder eine Drehbewegung des beobachteten Objekts ermittelt und mit einer vorgegebenen Toleranzschwelle verglichen werden, wobei die Toleranzschwelle bei einer Bewegung des beobachteten Objekts in einer zulässigen Richtung entsprechend nachgeführt wird und bei einer Bewegung des Objekts in einer unzulässigen Richtung unverändert beibehalten wird. Dadurch kann die Toleranzschwelle entsprechend der zeitlichen Veränderungen der Maschinenanlage angepasst werden, wodurch die Verfügbarkeit der Anlage gesichert und Wartungsarbeiten vermieden werden, ohne die Sicherheit zu gefährden.

In der vorangehenden Figurenbeschreibung wurde die vorliegende Erfindung anhand des in der Zeichnung dargestellten Ausführungsbeispiels erläutert, das zur Überwachung oder Messung von Translations- bzw. Relativbewegungen geeignet ist. Alternativ oder zusätzlich kann die Überwachungsvorrichtung nach der vorliegenden Erfindung auch zur Überwachung oder Messung von Bewegungsparametern von Rotationsbewegungen eines überwachten Objekts gegenüber dem Detektor der Überwachungsvorrichtung angewendet werden.
Während in der vorliegenden Beschreibung bestimmte exemplarische Ausführungsformen der Erfindung im Detail beschrieben und in den beigefügten Zeichnungen dargestellt wurden, sind solche Ausführungsformen lediglich illustrativ zu verstehen und nicht einschränkend für den Schutzbereich der Erfindung auszulegen. Es wird deshalb darauf hingewiesen, dass verschiedene Modifikationen an den beschriebenen, dargestellten oder anderen Ausführungsformen der Erfindung vorgenommen werden können, ohne von dem durch die beigefügten Ansprüche definierten Schutzumfang abzuweichen.

## Patentansprüche

1. Vorrichtung zur Erfassung der Position, einer relativen Bewegung eines beweglichen Objekts, der Drehwinkelposition und/oder einer Drehbewegung eines drehbaren Objekts umfassend mindestens einen Detektor sowie elektronische Mittel zur Auswertung der vom Detektor gelieferten Messsignale, **dadurch gekennzeichnet, dass**
die elektronischen Mittel dazu ausgebildet sind, eine Toleranzschwelle zu bestimmen, die einen erlaubten Bereich für Bewegungen des Objekts in eine unzulässige Richtung definiert, und die Toleranzschwelle nur dann neu zu bestimmen, wenn sich das beobachtete Objekt in eine zulässige Richtung bewegt.

2. Vorrichtung nach Anspruch 1,
- wobei die elektronischen Mittel dazu ausgebildet sind, die Toleranzschwelle in Abhängigkeit von einer aktuellen Position des Objekts zu bestimmen, wobei die Differenz zwischen der Toleranzschwelle und der aktuellen Position des Objekts einem vorgegebenen Toleranzwert entspricht;
und/oder
- wobei die elektronischen Mittel dazu ausgebildet sind, die Position, die Drehwinkelposition, die Drehbewegung und/oder die Bewegungsrichtung des Objekts aus den vom mindestens einen Detektor gelieferten Messsignalen zu bestimmen;
und/oder
- wobei die elektronischen Mittel dazu ausgebildet sind, die Position, die Drehwinkelposition, die Drehbewegung, die Bewegungsrichtung des Objekts, die Toleranzschwelle und/oder den Toleranzwert zu speichern;
und/oder
- wobei die elektronischen Mittel dazu ausgebildet sind, die Toleranzschwelle an eine neue Position des Objekts anzupassen, nachdem sich das Objekt in eine zulässige Richtung bewegt hat, wobei die neue Position des Objekts durch die weiteste Bewegung des Objekts in die zulässige Richtung festgelegt wird;
und/oder
- wobei die elektronischen Mittel dazu ausgebildet sind, die aktuelle Position, die Drehwinkelposition, die Drehbewegung und/oder die Bewegungsrichtung des Objekts über eine bestimmte Zeitspanne und/oder in bestimmten Zeitintervallen zu erfassen, um daraus die Toleranzschwelle zu bestimmen;
und/oder
- wobei die elektronischen Mittel dazu ausgebildet sind, die Toleranzschwelle in Abhängigkeit von der Bewegung, der Bewegungsrichtung und/oder der aktuellen Position des Objekts kontinuierlich neu zu berechnen; und/oder
- wobei die elektronischen Mittel das bewegliche Objekt derart steuern, dass eine Bewegung des Objekts verhindert wird, sobald die Toleranzschwelle erreicht und/oder überschritten wurde;
und/oder
- wobei die elektronischen Mittel dazu ausgebildet sind, ein Erreichen und/oder Überschreiten der Toleranzschwelle durch Vergleich mit der aktuellen Position des Objekts erfasst.

3. Verfahren zur Erfassung der Position, einer relativen Bewegung eines beweglichen Objekts, der Drehwinkelposition und/oder einer Drehbewegung eines drehbaren Objekts umfassend die folgenden Schritte:
▪ Bestimmen einer Toleranzschwelle, die einen erlaubten Bereich für Bewegungen des Objekts in eine unzulässige Richtung definiert, und
▪ erneutes Bestimmen der Toleranzschwelle nur dann, wenn sich das beobachtete Objekt in eine zulässige Richtung bewegt.

4. Verfahren nach Anspruch 3, wobei die Toleranzschwelle in Abhängigkeit von einer aktuellen Position des Objekts derart bestimmt wird, dass die Differenz zwischen der Toleranzschwelle und der aktuellen Position des Objekts einem vorgegebenen Toleranzwert entspricht;
und/oder
wobei die Toleranzschwelle an eine neue Position des Objekts angepasst wird, nachdem sich das Objekt in eine zulässige Richtung bewegt hat, wobei die neue Position des Objekts durch die weiteste Bewegung des Objekts in die zulässige Richtung festgelegt wird.

5. Verfahren nach einem der Ansprüche 3 bis 4, wobei die Position, die Drehwinkelposition, die Drehbewegung
und/oder die Bewegungsrichtung des Objekts aus den von mindestens einem Detektor gelieferten Messsignalen bestimmt werden.

6. Verfahren nach einem der Ansprüche 3 bis 5, wobei die Position, die Drehwinkelposition, die Drehbewegung, die Bewegungsrichtung des Objekts, die Toleranzschwelle und/oder den Toleranzwert gespeichert werden.

7. Verfahren nach einem der Ansprüche 3 bis 6, wobei die aktuelle Position, die Drehwinkelposition, die Drehbewegung und/oder die Bewegungsrichtung des Objekts über eine bestimmte Zeitspanne und/oder in bestimmten Zeitintervallen erfasst wird, um daraus die Toleranzschwelle zu bestimmen.

8. Verfahren nach einem der Ansprüche 3 bis 7, wobei die Toleranzschwelle in Abhängigkeit von der Bewegung, der Bewegungsrichtung und/oder der aktuellen Position des Objekts kontinuierlich neu berechnet wird.

9. Verfahren nach einem der Ansprüche 3 bis 8, wobei das bewegliche Objekt derart gesteuert wird, dass eine Bewegung des Objekts verhindert wird, sobald die Toleranzschwelle erreicht und/oder überschritten wurde.

10. Verfahren nach einem der Ansprüche 3 bis 9, wobei ein Erreichen und/oder Überschreiten der Toleranzschwelle durch einen Vergleich mit der aktuellen Position des Objekts erfasst wird.

## Claims

1. A device for detecting the position, a relative movement of a moving object, the rotational angular position and/or a rotational movement of a rotatable object, comprising at least one detector and electronic means for analyzing the measurement signals supplied by the detector;
**characterized in that**
the electronic means are adapted to determine a tolerance threshold which defines a permissible range for movements of the object in an impermissible direction, and to redetermine the tolerance threshold only when the observed object moves in a permissible direction.

2. The device according to claim 1,
- wherein the electronic means are adapted to determine the tolerance threshold in dependence on a current position of the object, wherein the difference between the tolerance threshold and the current position of the object corresponds to a predetermined tolerance value; and/or
- wherein the electronic means are adapted to determine the position, the rotational angular position, the rotational movement and/or the direction of movement of the object from the measurement signals supplied by the at least one detector; and/or
- wherein the electronic means are adapted to store the position, the rotational angular position, the rotational movement, the direction of movement of the object, the tolerance threshold and/or the tolerance value; and/or
- wherein the electronic means are adapted to adjust the tolerance threshold to a new position of the object after the object has moved in a permissible direction, wherein the new position of the object is determined by the farthest movement of the object in the permissible direction; and/or
- wherein the electronic means are adapted to detect the current position, the rotational angular position, the rotational movement and/or the direction of movement of the object over a certain period of time and/or at certain time intervals in order to determine therefrom the tolerance threshold; and/or
- wherein the electronic means are adapted to continuously recalculate the tolerance threshold in dependence on the movement, the direction of movement and/or the current position of the object; and/or
- wherein the electronic means control the movable object so as to prevent a movement of the object as soon as the tolerance threshold is reached and/or exceeded; and/or
- wherein the electronic means are adapted to detect a reaching and/or exceeding of the tolerance threshold by comparison with the current position of the object.

3. A method for detecting the position, a relative movement of a moving object, the rotational angular position and/or a rotational movement of a rotatable object, comprising the steps of:
- determining a tolerance threshold which defines a permissible range for movements of the object in an impermissible direction; and
- redetermining the tolerance threshold only if the observed object moves in a permissible direction.

4. The method according to claim 3, wherein the tolerance threshold is determined in dependence on a current position of the object so that the difference between the tolerance threshold and the current position of the object corresponds to a predetermined tolerance value; and/or
wherein the tolerance threshold is adjusted to a new position of the object after the object has moved in a permissible direction, the new position of the object being determined by the farthest movement of the object in the permissible direction.

5. The method according to any one of claims 3 to 4,
wherein the position, the rotational angle position, the rotational movement and/or the direction of movement of the object are determined from the measurement signals supplied by at least one detector.

6. The method according to any one of claims 3 to 5,
wherein the position, the rotational angular position, the rotational movement, the direction of movement of the object, the tolerance threshold and/or the tolerance value are stored.

7. The method according to any one of claims 3 to 6,
wherein the current position, the rotational angular position, the rotational movement and/or the direction of movement of the object is detected over a certain period of time and/or at certain time intervals in order to determine therefrom the tolerance threshold.

8. The method according to any one of claims 3 to 7,
wherein the tolerance threshold is continuously recalculated in dependence on the movement, the direction of movement and/or the current position of the object.

9. The method according to any one of claims 3 to 8,
wherein the movable object is controlled so that a movement of the object is prevented as soon as the tolerance threshold is reached and/or exceeded.

10. The method according to any one of claims 3 to 9,
wherein a reaching and/or exceeding of the tolerance threshold is detected by a comparison with the current position of the object.

## Revendications

1. Dispositif de détection de la position, d'un mouvement relatif d'un objet mobile, de la position angulaire de rotation et/ou d'un mouvement de rotation d'un objet rotatif comprenant au moins un détecteur ainsi que des moyens électroniques pour l'évaluation des signaux de mesure délivrés par le détecteur, **caractérisé en ce que** :
les moyens électroniques sont conçus pour déterminer un seuil de tolérance qui définit une plage permise pour les mouvements de l'objet dans une direction inadmissible, et pour déterminer à nouveau le seuil de tolérance seulement lorsque l'objet surveillé se déplace dans une direction admissible.

2. Dispositif selon la revendication 1,
- dans lequel les moyens électroniques sont conçus pour déterminer le seuil de tolérance en fonction d'une position actuelle de l'objet, la différence entre le seuil de tolérance et la position actuelle de l'objet correspondant à une valeur de tolérance prédéfinie ;
et/ou
- dans lequel les moyens électroniques sont conçus pour déterminer la position, la position angulaire de rotation, le mouvement de rotation et/ou le sens de mouvement de l'objet à partir des signaux de mesure délivrés par au moins un détecteur ;
et/ou
- dans lequel les moyens électroniques sont conçus pour mettre en mémoire la position, la position angulaire de rotation, le mouvement de rotation, le sens de mouvement de l'objet, le seuil de tolérance et/ou la valeur de tolérance ;
et/ou
- dans lequel les moyens électroniques sont conçus pour adapter le seuil de tolérance à une nouvelle position de l'objet, après que l'objet s'est déplacé dans une direction admissible, la nouvelle position de l'objet étant établie à la suite du mouvement le plus lointain de l'objet dans la direction admissible ;
et/ou
- dans lequel les moyens électroniques sont conçus pour détecter la position actuelle, la position angulaire de rotation, le mouvement de rotation et/ou le sens de mouvement de l'objet pendant un intervalle défini et/ou par intervalles définis, afin d'en déduire le seuil de tolérance ;
et/ou
- dans lequel les moyens électroniques sont conçus pour calculer à nouveau en continu le seuil de tolérance en fonction du mouvement, du sens de mouvement et/ou de la position actuelle de l'objet ;
et/ou
- dans lequel les moyens électroniques commandent l'objet mobile de telle manière qu'un mouvement de l'objet est empêché dès que le seuil de tolérance est atteint et/ou a été dépassé ;
et/ou
- dans lequel les moyens électroniques sont conçus pour détecter que le seuil de tolérance est atteint et/ou dépassé par comparaison à la position actuelle de l'objet.

3. Procédé de détection de la position, d'un mouvement relatif d'un objet mobile, de la position angulaire de rotation et/ou d'un mouvement de rotation d'un objet rotatif, comprenant les étapes suivantes :
• la détermination d'un seuil de tolérance qui définit une plage permise pour les mouvements de l'objet dans une direction inadmissible, et
▪ la détermination, à nouveau, du seuil de tolérance, seulement lorsque l'objet observé se déplace dans une direction admissible.

4. Procédé selon la revendication 3, dans lequel le seuil de tolérance est déterminé en fonction d'une position actuelle de l'objet, de telle manière que la différence entre le seuil de tolérance et la position actuelle de l'objet correspond à une valeur de tolérance prédéfinie ;
et/ou
dans lequel le seuil de tolérance est adapté à une nouvelle position de l'objet, après que l'objet s'est déplacé dans une direction admissible, la nouvelle position de l'objet étant établie à la suite du mouvement le plus lointain de l'objet dans la direction admissible.

5. Procédé selon l'une quelconque des revendications 3 et 4, dans lequel la position, la position angulaire de rotation, le mouvement de rotation et/ou le sens de mouvement de l'objet sont déduits des signaux de mesure délivrés par au moins un détecteur.

6. Procédé selon l'une quelconque des revendications 3 à 5, dans lequel la position, la position angulaire de rotation, le mouvement de rotation, le sens de mouvement de l'objet, le seuil de tolérance et/ou la valeur de tolérance sont mis en mémoire.

7. Procédé selon l'une quelconque des revendications 3 à 6, dans lequel la position actuelle, la position angulaire de rotation, le mouvement de rotation et/ou le sens de mouvement de l'objet pendant un intervalle défini et/ou par intervalles définis sont détectés afin d'en déduire le seuil de tolérance.

8. Procédé selon l'une quelconque des revendications 3 à 7, dans lequel le seuil de tolérance est calculé à nouveau en continu en fonction du mouvement, du sens de mouvement et/ou de la position actuelle de l'objet.

9. Procédé selon l'une quelconque des revendications 3 à 8, dans lequel l'objet mobile est commandé de telle manière qu'un mouvement de l'objet est empêché dès que le seuil de tolérance est atteint et/ou a été dépassé.

10. Procédé selon l'une quelconque des revendications 3 à 9, dans lequel le fait que le seuil de tolérance est atteint et/ou a été dépassé est détecté par comparaison à la position actuelle de l'objet.
